# EUROPEAN PATENT APPLICATION

(11) **EP 1 748 339 A2**
(43) Date of publication of application: **31.01.2007**
(21) Application number: 06015233.7
(22) Date of filing: 21.07.2006
(51) Int. Cl.: G05B 19/418

(54) **Workpiece tracking and handling device comprising a conveying means and a plurality of robots**

(30) Priority: 26.07.2005 JP 2005215454
(71) Applicant: FANUC LTD, Minamitsuru-gun, Yamanashi 401-0597 (JP)
(72) Inventor: Arimatsu, Taro, Minamitsuru-gun, Yamanashi 401-0310 (JP); Jyumonji, Takashi, Fujiyoshida-city, Yamanashi 403-0005 (JP)
(74) Representative: Thum, Bernhard

(57) **Abstract**

A tracking and handling device (10) capable of effectively handling workpieces (W), at low cost, even when a motion path of a robot (16,18,20) or a conveying interval of the workpieces (W) is varied. A first controller (22) for a first robot (16) on the most upstream side judges whether each workpiece (W) supplied from a source should be handled by the first robot (16). Data of the workpiece (W) not to be handled by the first robot (16) is sent to a second controller (24) for a second robot (18) next to the first robot (16). The second controller (24) judges whether each workpiece (W) should be handled by the second robot (18) based on data from the first controller (22). Data of the workpiece (W) not to be handled by the second robot (18) is sent to a third controller (26) for a third robot (20) on the most downstream side. The third controller (26) judges whether a remaining workpiece (W) should be handled by the third robot (20) based on data from the second controller (24).

## Description

### BACKGROUND OF THE INVENTION

### 1. Field of the Invention

The present invention relates to a tracking and handling device for transferring a workpiece, from a conveyor to another place, using a robot.

### 2. Description of the Related Art

In a work handling system having an industrial robot and a vision sensor of the prior art, workpieces conveyed by a conveyor are gripped by one of a plurality of robots positioned along the conveying path and, then, transferred from on the conveyor to another place or process. In such a system, it is very important to properly control the tracking motion of the plurality of robots.

For example, Japanese Unexamined Patent Publication No. 9-131683 discloses a robot system having a plurality of robots arranged on the path of a conveyor and a camera for imaging the workpieces on the conveyor. In the system, a robot controller has a means for previously ordering the motion of the robots for every workpiece based on the detection result of the workpieces by the camera. The robots operate according to the order.

Also, Japanese Patent Publication No. 3077564 discloses a handling device having a plurality of robots arranged on the path of a conveyor and a camera for imaging the workpieces on the conveyor. In the device, the number of workpieces which should not be gripped by (or should pass in front of) a robot located on an upstream side of the conveyor is predetermined and the robot on the upstream side grips a workpiece based on the predetermined number. Accordingly, another robot, located on a downstream side of the conveyor, grips any workpiece which has passed in front of the robot on the upstream side.

In the robot system described in Japanese Unexamined Patent Publication No. 9-131683, the gripping motion of the robot is programmed based on the operable time of each robot. Therefore, even when the time of conveyance of the workpieces is nonregular, the robot on the upstream side can effectively grip the workpiece without entering a wait state. In this system, however, the order of the gripping motion of the robot is based on the operable time from the beginning of the tracking motion of the robot to the completion of one cycle of the motion. Therefore, when the path of the motion of the robot or the waiting time for a confirmation signal is changed, it is difficult to estimate the operable time.

On the other hand, in the handling device described in Japanese Patent Publication No. 3077564, the number of workpieces which are not gripped by the robot on the upstream side of the conveyor is predetermined. Therefore, the device can effectively handle each workpiece when the time of conveyance of a workpiece is a generally constant. However, when the interval time is nonregular, there may be a situation in which the robot on the upstream side is in a wait state, without gripping the workpiece, although the robot has enough capacity to grip the workpiece. Accordingly, the handling device may be inefficient in this case.

### SUMMARY OF THE INVENTION

Accordingly, it is an object of the present invention to provide a tracking and handling device capable of effectively handling a workpiece even when the time of conveyance of a workpiece is nonregular or a path of the motion of the robot is changed.

To this end, according to the present invention, there is provided a tracking and handling device comprising: a conveying means for conveying a plurality of workpieces which are continuously supplied; a travel distance detecting means for detecting a travel distance of the conveying means; a workpiece position detecting means for detecting the positions of the workpieces conveyed by the conveying means; a plurality of robots including first and second robots arranged along the conveying means; a plurality of robot controllers including first and second robot controllers for controlling the first and second robots; and a communication means which connects the workpiece position detecting means and each robot controller, the tracking and handling device being configured such that each workpiece on the conveying means is handled by one of the robots, without stoppage the conveying means, based on the travel distance of the conveying means detected by the travel distance detecting means, wherein the workpiece position detecting means transmits position data, of the detected workpiece, via the communication means, to the first controller for controlling the first robot located on the most up stream side of the conveying means in relation to the conveying direction of the conveying means, the first robot controller judges whether the first robot should handle the detected workpiece when the first controller has received position data of the workpiece from the workpiece position detecting means and, then, transmits position data of the workpiece, which is not to be handled by the first robot, to the second robot controller for controlling the second robot located on the downstream side in relation to the first robot.

The tracking and handling device may include one or more second robots, which are located downstream in relation to the first robot but not at the most downstream side of the conveying means in relation to the conveying direction of the conveying means, and a third robot, which is located on the most downstream side of the conveying means. In this case, the second robot controller may judge whether the second robot should handle the detected workpiece when the second controller has received position data of the workpiece from the robot controller for controlling the robot located on the upstream side in relation to the second robot and, then, transmits position data of the workpiece, which is not to be handled by the second robot, to the robot controller for controlling the robot located on the downstream side in relation to the second robot. Further, a third robot controller may control the third robot such that the third robot handles the detected workpiece based on the position data of the workpiece received, via the communication means, from the robot controller for controlling the robot located on the upstream side in relation to the third robot.

The judgment of each robot controller is preferably performed based on the position data at the moment of the judgment.

The judgment of each robot controller may be performed based on the maximum handling capacity of the robot controlled by the corresponding robot controller.

Alternatively, each robot controller may previously determine the number of the workpiece which should be handled and the number of the workpiece which should not be handled by the robot controlled by the corresponding robot controller, and controls the robot based on the predetermined numbers.

The conveying means may be wide. In this case, the robots are preferably located on both sides of the conveying means.

In addition, the tracking and handling device may further include a discharging conveyor for discharging the workpiece to a set place after a robot has handled the workpiece.

### BRIEF DESCRIPTION OF THE DRAWINGS

The above and other objects, features and advantages of the present invention will be made more apparent by the following description, of the preferred embodiments thereof, with reference to the accompanying drawings wherein:
Fig. 1 shows a schematic configuration of a tracking and handling device according to the invention;
Fig. 2 is a block diagram showing a constitution of a robot controller of Fig. 1;
Fig. 3 is a flowchart showing a procedure for detecting a workpiece;
Fig. 4 is a diagram showing the positional relation between the workpiece and the robot;
Fig. 5 is a flowchart showing a procedure for judging whether the workpiece should be handled by the robot;
Fig. 6 is a flowchart showing a procedure for previously determining the workpiece to be handled by each robot;
Fig. 7 is a diagram showing a modification of a tracking and handling device including a wide conveyor; and
Fig. 8 is a diagram showing a tracking and handling device further including a discharging conveyor.

### DETAILED DESCRIPTIONS

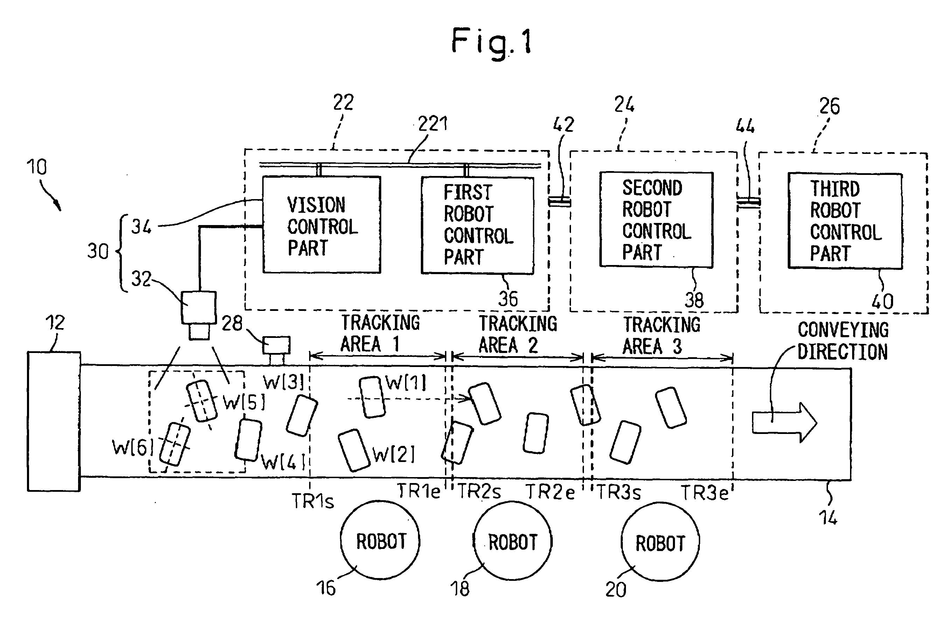

The present invention will be described below with reference to the drawings. Fig. 1 shows a typical constitution of a tracking and handling device 10 and a total configuration of a robot system including the device and vision sensor. The tracking and handling device 10 of the invention has a conveying means, or a conveyor 14, connected to a workpiece supplying means 12 for continuously supplying a plurality of articles or workpieces W[i] (i = 1, 2, 3, ..). The tracking and handling device 10 also has first, second and third robots 16, 18 and 20 for tracking and handling the workpieces on the conveyor 14 without stopping the conveyor 14. As shown in Fig. 1, the first and third robots 16 and 20 are located on the most upstream and most downstream stream sides in relation to the conveying direction of the workpieces. Therefore, when the number of the robots is equal to or more than four, the second robot can be a plurality of robots. The robots 16, 18 and 20 are controlled by first, second and third robot controllers 22, 24 and 26, respectively. The conveyor 14 has a not-shown drive shaft driven by a not-shown motor. The rotational speeds of the drive shaft and the motor are detected by a travel distance detecting means or a pulse coder 28 and outputted to the first robot controller 22 in pulse form.

A workpiece position detecting means or a vision sensor 30 detects the positions of the workpieces to enable the tracking motion of the robots. The vision sensor 30 is constituted by a camera 32 and a vision control part 34 for processing an image captured by the camera 32. In this embodiment, the vision control part 34 is incorporated within the first robot controller 22. However, the vision control part 34 need not be incorporated within the robot controller and may be separated from the robot controller.

As shown in Fig. 1, the first robot controller 22 has a first control part 36 for the first robot 16. The first control part 36 is configured to receive data including the positions of the workpieces from the vision control part 34 and to control the tracking motion of the first robot 16 by using data output from the pulse coder 28. Similarly, the second and third robot controllers 24 and 26 have second and third control parts 38 and 40 connected to the second and third robots 18 and 20. Also, the control parts are connected to each other via a communication means or communication lines 42 and 44. Accordingly, data regarding a workpiece which is not handled by the robot on the upstream side (for example, the first robot 16) may be transmitted to the robot on the downstream side (for example, the second robot 18).

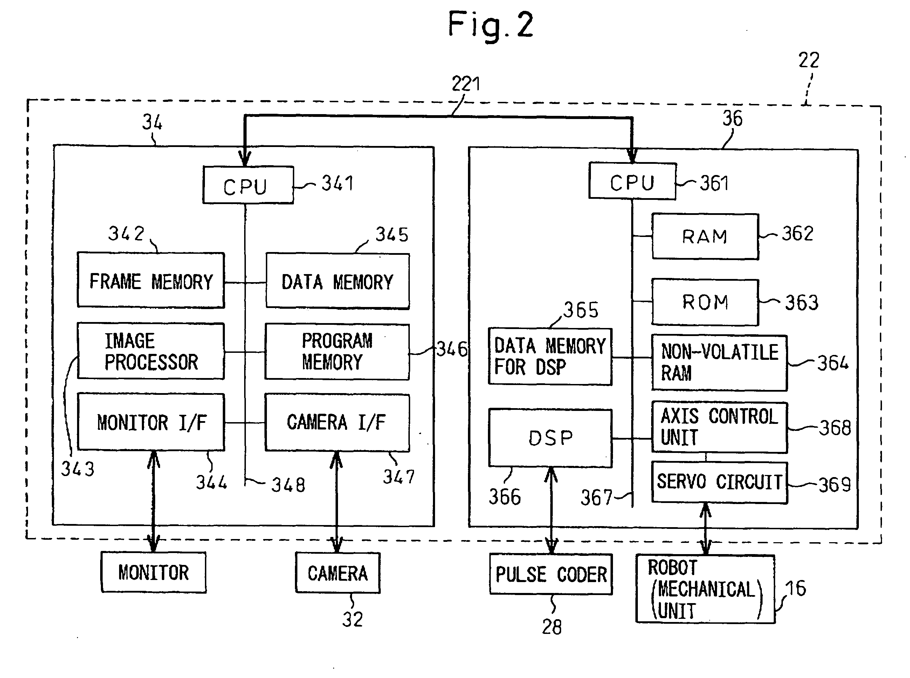

Fig. 2 is a block diagram showing an internal constitution of the first robot controller 22. As shown, the vision control part 34 incorporated within the first robot controller 22 has a microprocessor or a CPU 341. A frame memory 342, an image processor 343, a monitor interface 344, a data memory 345, a program memory 346 and a camera interface 347 are connected to the CPU 341 via a bus 348. The above mentioned camera 32 is connected to the camera interface 347. An image captured by the camera 32 is stored in the frame memory 342. The image processor 343 analyzes data stored in the frame memory 342. The data memory 345 stores various setting data for the vision control part 34 and the program memory 346 stores an analysis program.

The CPU 341 is connected to a CPU 361 of the first control part 36 via a bus 221 of the first robot controller 22. A RAM 362, a ROM 363, a non-volatile memory 364, a digital signal processor (DSP) 366 and a data memory 365 for the DSP are connected to the CPU 361 via a bus 367. The ROM 363 stores a program for controlling a whole system and the RAM 362 temporarily stores data to be processed by the CPU 361. The non-volatile memory 364 stores a motion program, setting data and a data transfer program (as described below) for the first robot 16. The DSP 366 is a processor for processing an output signal of a count of the pulse coder 28. The data memory 365 for the DSP stores data processed by the DSP 366 and setting parameters. The DSP 366 detects the count of the pulse coder 28 according to a command of the CPU 361 and writes the count in a predetermined area of the data memory 365. The CPU 341 of the vision control part 34 may also access the data memory 365 via the CPU 361 of the first robot controller 22. Further, the first control part 36 has an axis control unit 368, for controlling the first robot 16, connected to the first robot 16 via a servo circuit 369. Similarly, each of the second and third control parts 38 and 40 for controlling the second and third robots 18 and 20 may have the same constitution as that of the first control part 36, therefore, the details are omitted.

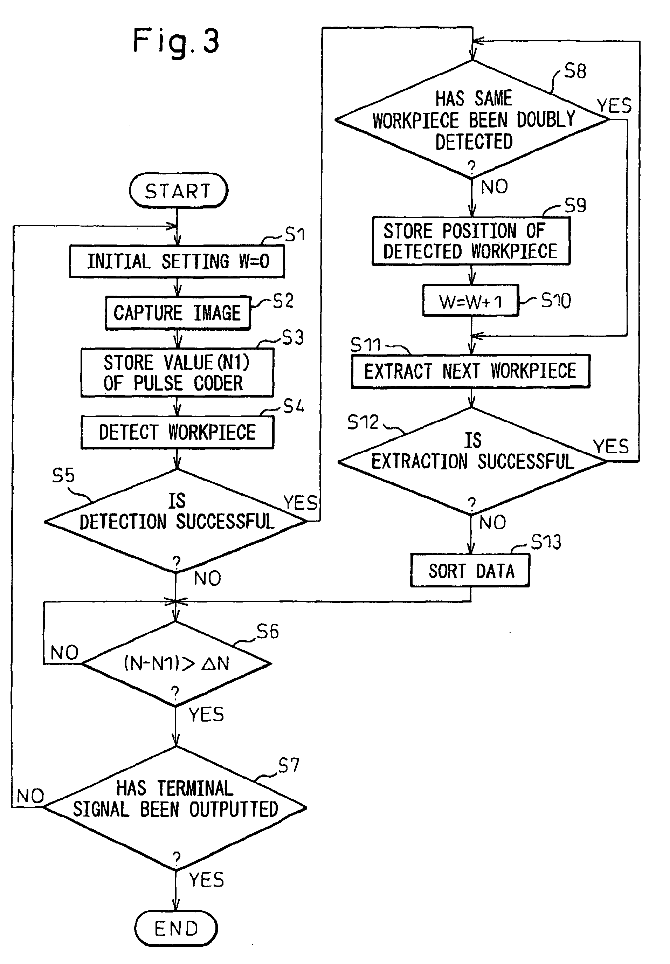

Next, with reference to Fig. 3, the detecting process of the vision control part 34 is explained. When the CPU 341 of the vision control part 34 outputs a command for scanning an image, a register value W is set to zero as an initial value (step S1). Then, the camera 32 images one or more images of the workpiece or workpieces and the image data is stored in the frame memory 342 (step S2). Next, the count value N1 of the pulse coder 28 is stored in the data memory 345 and the DSP memory 365 of the control part 36 (step S3). After that, in step S4, the image captured in step S2 is analyzed by using the analysis program stored in the program memory 346 so as to detect the workpiece. At this point, success or failure of detection (i.e., whether a workpiece is represented in the captured image) is judged in step S5. When no workpiece is detected, the process progresses to step S6 and waits until the next image is captured. In other words, in step S6, the count value N1 of the pulse coder 28 is repeatedly checked until the travel distance (N-N1) of the conveyor 14 after the most recent image is captured exceeds a threshold ΔN. When the travel distance exceeds the threshold, it is checked that a signal for terminating the process is not outputted in step S7. After that, the process returns to step S1.

On the other hand, when a workpiece is detected in step S5, the process progresses to step S8 so as to check whether the image data of one workpiece is doubly detected or not in the detecting process of the position of the workpiece. When it is confirmed that the image data is not doubly detected, the detected result is stored in the memory and associated with the count value N1 of the pulse coder (step S9). Then, the resister value W is incremented by one in step S10 and the image of the next workpiece is extracted in step S11. On the other hand, when the image data of one workpiece is doubly detected, the process progresses to step S11 without incrementing the resister value. In the next step S12, the extracted result is checked. When the extraction is success, i.e., another workpiece is detected, the process returns to step S8. On the other hand, when the extraction is failure, it means that there is no workpiece to be detected. Therefore, the process progresses to step S13 so as to sort all data in a data buffer, based on an X-coordinate of each data. In other words, the process from step S8 to S12 is repeated the number of times equal to the number of detected data.

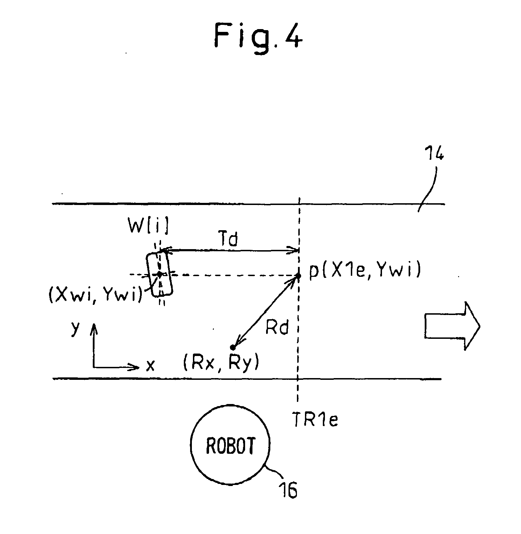

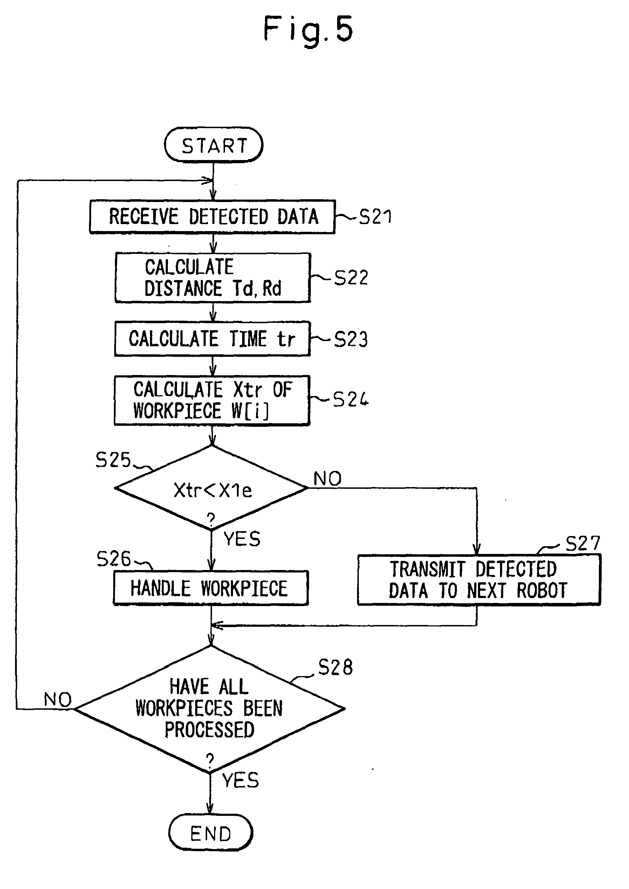

Next, with reference to Figs. 4 and 5, the procedure for judging whether one robot (the first robot 16 in this case) may handle a workpiece detected by the vision sensor 30 is explained. First, as shown in Fig. 4, a X-Y coordinate is set in which the X-axis is along the conveying direction of the conveyor 14 and the Y-axis is perpendicular to X-axis and traverses the conveyor 14. When a workpiece W[i] is positioned at a coordinate (Xwi, Ywi), the distance in the X-direction between the workpiece W[i] and a lower limit line TR1e, positioned on the downstream side in relation to the workpiece and extending in Y-direction in the tracking area, is referred to as Td. As is apparent from the tracking area 1 of Fig. 1, at a certain point, the first robot 16 cannot handle either a workpiece positioned downstream from the lower limit line or a workpiece positioned upstream from an upper limit line TR1s. As shown in Fig. 4, a point p (X1e, Ywi) is an intersection of the lower limit line TR1e with a straight line extending from the coordinate (Xwi, Ywi) in X-direction. Further, the distance between a representative point (Rx, Ry) of a work tool (not shown) of the first robot 16 for handling the workpiece and the intersection point p is referred to as Rd.

Fig. 5 shows a flowchart for judging whether the first robot 16 can handle the workpiece W[i] positioned as shown in Fig. 4, based on information of the position of the workpiece at that point in time. First, when the robot control part 36 receives the detected data, including the output of the pulse coder 28, from the vision sensor 30 (step S21), the present position of the work tool (Rx, Ry) of the first robot 16 and the position of the detected workpiece (Xwi, Ywi) are read so as to calculate the above distances Td and Rd (step S22). Next, using the motion speed of the first robot 16 (previously known) and the distance Rd, time tr necessary for the work tool of the first robot to move the distance Rd is calculated (step S23). Then, in step S24, the coordinate of the workpiece W[i] (Xtr, Ywi) after a lapse of the time tr is calculated. In the next step S25, it is judged whether the workpiece W[i] after a lapse of the time tr reaches the lower limit line TR1e or not. At this point, when the workpiece W[i], after a lapse of the time tr, has not reached the lower limit line TR1e (i.e., Xtr < X1e), the workpiece W[i] can be handled by the first robot 16 and the procedure progresses to step S26. Contrarily, when the workpiece W[i], after a lapse of the time tr, has reached the lower limit line TR1e, the first robot can no longer handle the workpiece W[i] and the data of the workpiece W[i] is sent to a right next robot on the downstream side (the second robot 18, in this case) in step S27. The above steps are repeated in relation to all detected workpieces (step S28).

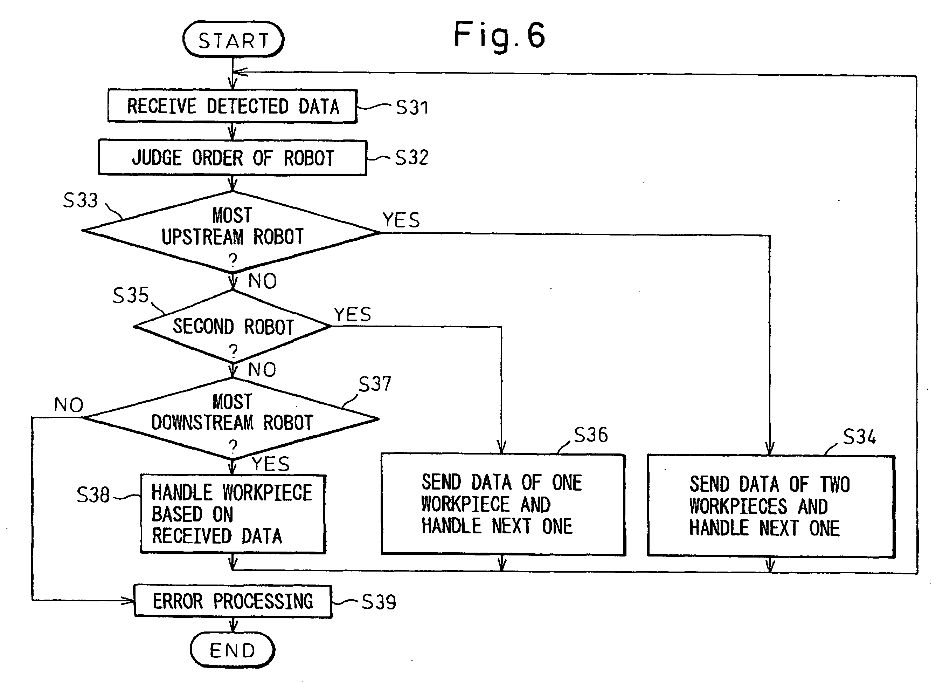

According to the flowchart of Fig. 5, each robot can handle as many workpieces as possible. On the other hand, as a flowchart shown in Fig. 6 indicates, the number of the workpiece which should be handled and the number of the workpiece which should not be handled by each robot may be previously determined.

First, similarly to step S21 in the flowchart of Fig. 5, the robot control part 36 receives the detected data from the vision sensor 30 in step S31. Then, each robot controller judges the order of the corresponding robot in relation to the conveying direction. Therefore, in the first robot controller 22 of the first robot 16 on the most upstream side, the procedure progresses from step S33 to step S34. In step S34, the first controller 22 does not execute the process as shown in Fig. 5 in relation to data of two workpieces (for example, W[1] and W[2]) subsequently received from the vision sensor 30. Then, the robot controller 22 sends data of the two workpieces to the second controller 24 of the second robot 18. Accordingly, a next workpiece W[3] is handled by the first robot 16. Similarly, the first controller 22 sends detected data of two workpieces W[4] and W[5] to the second controller 24 and controls the first robot 16 such that the first robot handles a next workpiece W[6].

In the second robot controller 24 of the second robot 18, the procedure progresses from step S35 to step S36. In step S36, the second controller 24 does not execute the process as shown in Fig. 5 in relation to data of one workpieces (for example, W[1]) of the two workpieces W[1] and W[2] received from the first controller 22. Then, the robot controller 24 sends data of the workpiece W[1] to the third controller 26 of the third robot 20 on the most downstream side. Accordingly, the remaining workpiece W[2] is handled by the second robot 18. Similarly, the second controller 24 sends detected data of the workpieces W[4], of the two workpieces W[4] and W[5] received from the first controller 22, to the third controller 26 and controls the second robot 18 such that the second robot handles the remaining workpiece W[5].

Finally, in the third robot controller 26 of the third robot 20, the procedure progresses from step S37 to step S38. In step S38, the third controller 26 executes the process as shown in Fig. 5 in relation to all data of the workpieces (for example, W[1], W[4], ..) received from the second controller 24, such that the third robot handles the workpieces. In addition, if the judgment is "NO" in step S37, it means that no controller is processing (i.e., is in error). In this case, therefore, the procedure progresses to step S39 so as to execute a suitable error process.

In other words, according to the flowchart as shown in Fig. 6, in the first robot 16 on the most upstream side, the operation, in which two workpieces are passed through and one workpiece is handled by the robot, is repeated. Then, in the second robot 18 next to the first robot 16, the operation, in which one workpiece is passed through and another workpiece is handled by the robot, is repeated. Further, in the third robot 20 on the most downstream side, the operation, in which no workpiece is passed through and remaining workpiece is handled by the robot, is repeated. In this way, the handling order of the workpieces may be determined without taking into account the maximum handling capacity of each robot, whereby the flow of data may be simplified.

The above embodiment includes three robots, however, it is obvious that the present invention may be performed even when two, four or more robots are used. In calculating of the movement of each workpiece, the vision sensor reads the count value of the travel distance detecting means such as the pulse coder of the conveyor and, then, data including the travel distance of the conveyor is used. However, the movement of each workpiece can also be calculated by using a device such as a photoelectric tube and a signal thereof.

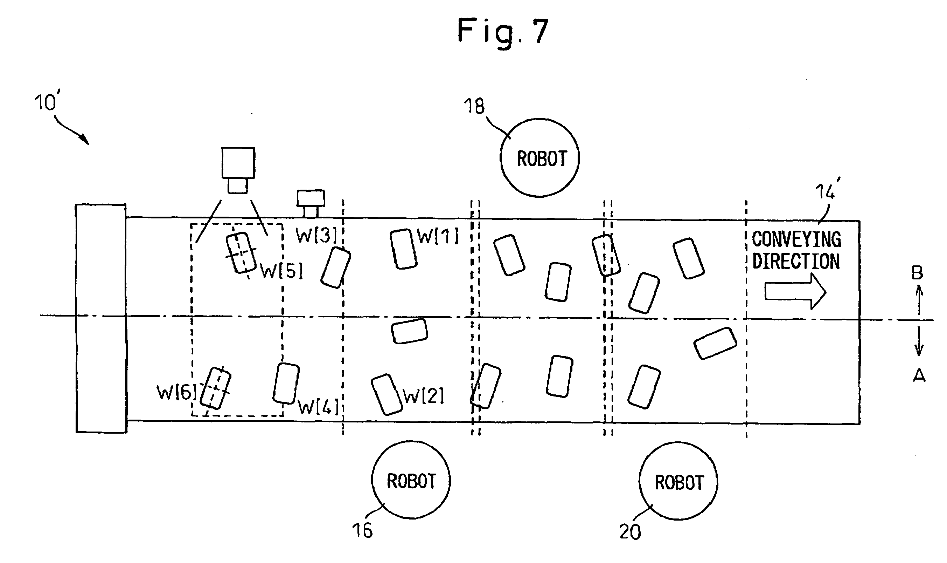

A tracking and handling device 10' as shown in Fig. 7 is a modification of the tracking and handling device 10 as described above. The device 10' includes a wide conveyor 14' connected to a workpiece supplying means 12' and a plurality of robots located on both sides of the conveyor. In such a case, in which the robots are positioned on both sides of the conveyor 14', a plurality of workpieces are classified into two groups A and B, based on a Y-coordinate of each workpiece detected by the vision sensor. After the detected data of the workpieces is sent to each robot controller, each robot on the side of the group A (in this case, a first and third robots 16 and 20) handles the workpiece included in the group A (for example, workpieces W[2], W[4], W[6],..). On the other hand, each robot on the side of the group B (in this case, a second robot 18) handles the workpiece included in the group B (for example, workpieces W[1], W[3], W[5],..). In addition, a plurality of cameras may be arranged on the conveyor 14'. In this case, it may be advantageous that one camera is used for a relatively large workpiece and another camera is used for a relatively small workpiece.

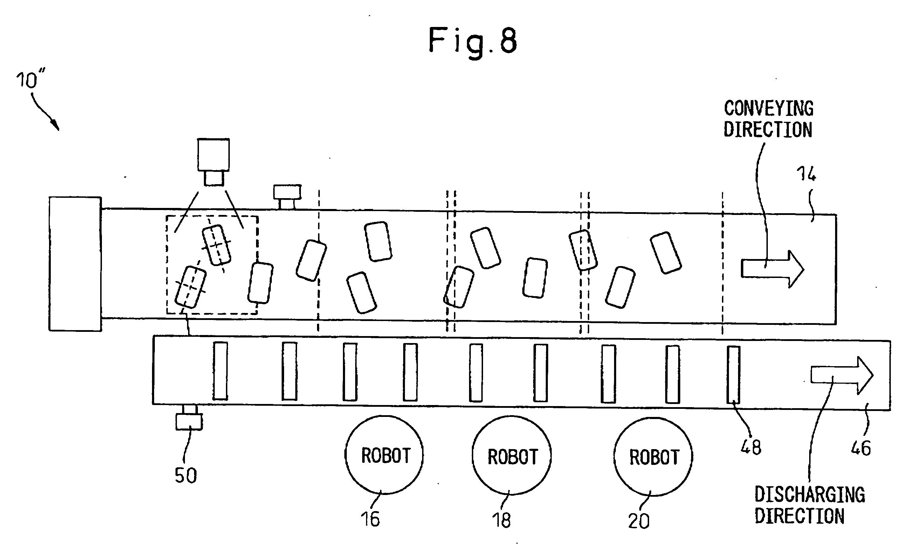

The workpiece supplying means is described above. However, a means for discharging handled workpieces to another place may be also necessary in a system such as shown in Fig. 1. A tracking and handling device 10" as shown in Fig. 8 includes a discharging conveyor 46, in addition to a conveyor 14, for conveying workpieces to a certain place. As shown in Fig.8, a plurality of parting plates 48 may be arranged at equal distances on the conveyor 46. On the supplying conveyor 14, the tracking operation using a vision sensor is performed. On the other hand, on the discharging conveyor 46, a travel distance detecting means such as a pulse coder 50 is arranged, whereby the tracking operation may be performed without using the vision sensor. The tracking operation on the supplying conveyor 14 may also be performed without using the vision sensor.

Due to the tracking and handling device according to the above embodiment, the process for specifying a workpiece which can be handled by each robot is repeated. Therefore, an optimum number of robots may be arranged along the conveyor for handling workpieces, corresponding to transportation volume of the workpieces on the conveyor. Further, in any embodiment above, each robot may handle one workpiece or several workpieces together.

According to the tracking and handling device of the present invention, when a plurality of workpieces are supplied at random intervals and randomly positioned on the conveyor and when one robot cannot be handle all of the workpieces, the tracking and handling operation may be effectively performed at low cost by means of a combination of one vision sensor and a plurality of robots.

While the invention has been described with reference to specific embodiments chosen for the purpose of illustration, it should be apparent that numerous modifications could be made thereto, by one skilled in the art, without departing from the basic concept and scope of the invention.

## Claims

1. A tracking and handling device (10) comprising:
a conveying means (14) for conveying a plurality of workpieces (W) which are continuously supplied;
a travel distance detecting means (28) for detecting a travel distance of the conveying means (14) ;
a workpiece position detecting means (30) for detecting the positions of the workpieces conveyed by the conveying means (14);
a plurality of robots (16, 18, 20) including first and second robots (16, 18) arranged along the conveying means (14);
a plurality of robot controllers (22, 24, 26) including first and second robot controllers (22, 24) for controlling the first and second robots (14, 16); and
a communication means (221, 42, 44) which connects the workpiece position detecting means (30) and each robot controller (22, 24, 26),
the tracking and handling device being configured such that each workpiece (W) on the conveying means (14) is handled by one of the robots without a stoppage the conveying means (14), based on the travel distance of the conveying means (14) detected by the travel distance detecting means (28),
**characterized in that** the workpiece position detecting means (30) transmits position data of the detected workpiece, via the communication means (221), to the first controller (22) for controlling the first robot (16) located on the most upstream side of the conveying means (14) in relation to the conveying direction of the conveying means (14),
the first robot controller (22) judges whether the first robot (16) should handle the detected workpiece when the first controller (22) has received position data of the workpiece from the workpiece position detecting means (30) and, then, transmits position data of the workpiece, which is not to be handled by the first robot (16), to the second robot controller (24) for controlling the second robot (18) located on the downstream side in relation to the first robot (16).

2. The tracking and handling device according to claim 1, comprising one or more second robots (18), which are located on the downstream sides in relation to the first robot (16) but not on the most downstream side of the conveying means (14) in relation to the conveying direction of the conveying means (14), and a third robot (18), which is located on the most downstream side of the conveying means (14),
**characterized in that** the second robot controller (24) judges whether the second robot (18) should handle the detected workpiece when the second controller (24) has received position data of the workpiece from the robot controller for controlling the robot located on the upstream side in relation to the second robot (18) and, then, transmits position data of the workpiece, which is judged to not be handled by the second robot (18), to the robot controller for controlling the robot located on the downstream side in relation to the second robot (18),
and wherein a third robot controller (24) controls the third robot (18) such that the third robot (18) handles the detected workpiece based on the position data of the workpiece received, via the communication means, from the robot controller (24) for controlling the robot (18) located on the upstream side in relation to the third robot (20).

3. The tracking and handling device according to claim 1 or 2, **characterized in that** the judgment of each robot controller (22, 24, 26) is performed based on the position data at the moment of the judgment.

4. The tracking and handling device according to claim 1 or 2, **characterized in that** the judgment of each robot controller (22, 24, 26) is performed based on the maximum handling capacity of the robot (16, 18, 20) controlled by the corresponding robot controller.

5. The tracking and handling device according to claim 1 or 2, **characterized in that** each robot controller (22, 24, 26) previously determines the numbers of the workpiece which should be handled and the number of the workpiece which should not be handled by the robot (16, 18, 20) controlled by the corresponding robot controller, and controls the robot based on the predetermined numbers.

6. The tracking and handling device according to claim 1 or 2, **characterized in that** the conveying means (14') is wide and the robots (16, 18, 20) are located on both sides of the conveying means (14').

7. The tracking and handling device according to claim 1 or 2, **characterized in that** the device further comprises a discharging conveyor (46) for discharging the workpiece (W) to a set place after a robot has handled the workpiece.
